(19) **Europäisches Patentamt**
**European Patent Office**
**Office européen des brevets**

(11) **EP 2 321 913 B1**

(12) **FASCICULE DE BREVET EUROPEEN**

(45) Date de publication et mention
de la délivrance du brevet:
**27.03.2013 Bulletin 2013/13**

(51) Int Cl.:
***H04B 7/06*** (2006.01)     ***H04B 7/08*** (2006.01)
***H04B 7/04*** (2006.01)

(21) Numéro de dépôt: **09737018.3**

(22) Date de dépôt: **18.08.2009**

(86) Numéro de dépôt international:
**PCT/FR2009/001012**

(87) Numéro de publication internationale:
**WO 2010/020718 (25.02.2010 Gazette 2010/08)**

(54) **PROCÉDÉ ET DISPOSITIF DE TRANSMISSION HERTZIENNE SIMULTANÉE D'UN ENSEMBLE DE MESSAGES À PARTIR D'UNE PLURALITÉ D'ÉMETTEURS INDÉPENDANTS VERS UN RÉCEPTEUR UNIQUE COMPORTANT UNE PLURALITÉ D'ANTENNES**

VERFAHREN UND EINRICHTUNG ZUR GLEICHZEITIGEN HF-ÜBERTRAGUNG EINER MENGE VON NACHRICHTEN VON MEHREREN UNABHÄNGIGEN ABSENDERN ZU EINEM EINZIGEN EMPFÄNGER, UMFASSEND MEHRERE ANTENNEN

METHOD AND DEVICE FOR SIMULTANEOUS RF TRANSMISSION OF A SET OF MESSAGES FROM A PLURALITY OF INDEPENDENT SENDERS TO A SINGLE RECEIVER COMPRISING A PLURALITY OF ANTENNAS

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **18.08.2008 FR 0804633**

(43) Date de publication de la demande:
**18.05.2011 Bulletin 2011/20**

(73) Titulaire: **Université du Sud Toulon-Var
83957 La Garde Cedex 20 (FR)**

(72) Inventeurs:
• **CHABRIEL, Gilles
F-83210 Sollies Pont (FR)**
• **BARRERE, Jean
F-83000 Toulon (FR)**

(74) Mandataire: **Scheer, Luc et al
Global Inventions
38, Allée Valériane- Domaine de la Tour
83700 Saint-Raphael (FR)**

(56) Documents cités:
**EP-A- 0 181 444     EP-A- 1 786 118
EP-A- 1 871 012     WO-A-2006/034425**

## Description

La présente invention concerne un procédé et un dispositif de transmission hertzienne simultanée d'un ensemble de messages à partir d'une pluralité de $N$ émetteurs vers un récepteur unique comportant une pluralité de $M$ antennes réceptrices, tel que $M$ soit supérieur ou égal à $N$. Dans la suite, on désignera de façon équivalente ce récepteur par le terme d'antenne réceptrice ou de système de réception élémentaire (récepteur) associé à ladite antenne réceptrice.

L'invention trouve des applications industrielles multiples, par exemple dans le cadre de réseaux de communication hertziens à grande ou moyenne échelle de signaux numériques, en particulier dans le domaine de la téléphonie mobile ou des réseaux informatiques sans fil, ou des communications radio analogiques, ou d'autres signaux dans le domaine audio, au sens large.

## ETAT DE LA TECHNIQUE :

Il existe un grand nombre de modes de transmission hertzienne, consistant à transmettre un ou plusieurs messages depuis un ou plusieurs points de l'espace vers un récepteur unique. On va dans un premier temps rappeler quelques modes de transmission connus, pour situer la problématique de l'invention parmi ces modes connus.

## Transmission d'un message unique :

Le message, qu'il soit d'origine numérique ou non, se présente avant transmission sous la forme d'un signal analogique $x(t)$ appelé signal d'information dont la puissance se concentre principalement à l'intérieur d'un domaine fréquentiel compact $[0,F_{max}]$ ($F_{max}$ étant la fréquence la plus élevée présente dans le signal) réparti autour d'une fréquence centrale $F_c = F_{max}/2$. On parle de signal en bande de base.

La largeur de bande relative de ce signal (définie comme $F_{max}/F_c = 2$) est importante et ne permet pas sa transmission de façon simple sur de grandes distances, du fait de problèmes de dispersion de fréquences liés pour l'essentiel à la présence de multiples chemins de propagation caractérisant la largeur de la bande de cohérence du canal de transmission. Pour réduire cette largeur de bande relative, on augmente la fréquence centrale par une opération de modulation : le signal effectivement transmis est un signal porteur haute fréquence ($F'_c$), dont l'amplitude et/ou la fréquence et/ou la phase est affectée par le signal d'information $x(t)$. Lorsque la nouvelle largeur de bande relative ($2F_{max}/F'_c$ pour la modulation d'amplitude) est inférieure à $1/100$ et/ou lorsque cette nouvelle largeur de bande relative est inférieure à la bande de cohérence du canal de transmission, on considère que les effets de la dispersion sont négligeables : on parle alors de signal bande-étroite.

Le signal bande-étroite est émis au moyen d'une antenne électromagnétique. Au niveau de l'antenne électromagnétique de réception, une opération de changement de fréquence permet de récupérer de nouveau un signal en bande de base, noté $y(t)$. Ce dernier correspond, à un coefficient d'amplitude $h$ près, à une fonction $g$ du signal d'information $x(t)$ : $y(t) = h.g(x(t))$. La valeur de ce coefficient est liée aux retards de propagation de l'onde à travers le trajet direct et les éventuels chemins réfléchis. Ce coefficient caractérise le canal de transmission entre l'émetteur et le récepteur. La fonction $g$ traduit le type de modulation utilisé à l'émission. Dans le cas particulier de la modulation d'amplitude, la fonction $g$ se réduit à la fonction identité ($g(x(t)=x(t))$) et le signal ramené en bande de base à la réception sera directement le signal d'information à un coefficient près : $y(t)=h.x(t)$. Dans les autres cas, il sera possible d'estimer le signal d'information à un coefficient près après inversion de la fonction $g$. Dans la suite du document, pour ne pas alourdir l'exposé, on se placera systématiquement dans le cadre de la modulation d'amplitude où la fonction $g$ est sans effet et peut donc être ignorée.

Cela étant, on précisera à quelle étape du procédé l'inversion numérique de l'effet de la fonction $g$ sera nécessaire dans le cas où la modulation utilisée n'est pas une modulation d'amplitude.

## Transmission de plusieurs messages (accès multiple à un récepteur unique)

On cherche dans ce cas à transmettre un ensemble de $N$ messages vers un récepteur unique. Au niveau physique, le principe reste bien entendu le même que précédemment. Pour que les messages puissent être dissociés à la réception, il est nécessaire de les répartir dans des espaces disjoints plus ou moins complexes. On parle d'accès multiple par répartition ou « Division Multiple Access » en terminologie anglosaxonne, noté DMA. Plusieurs modes de répartition du signal reçu sont utilisés.

## Répartition en temps ou « Time-DMA » (notée TDMA)

Il s'agit d'un multiplexage temporel pour lequel la porteuse est divisée en intervalles de temps. Les intervalles de temps sont regroupés en trames. A chaque message est alloué un intervalle de temps au sein d'une trame TDMA. Les trames véhiculent, en plus des différents messages, des informations de début et de fin de message permettant au système récepteur de trier les différents messages.

Cette technique, bien qu'adaptée au cas d'un émetteur unique, peut être utilisée si les $N$ messages sont émis depuis $N$ positions (émetteurs) distinctes. Dans ces conditions, une communication entre les différents émetteurs (émetteurs coopérants) est nécessaire afin de gérer la mise en forme des trames.

Le débit de transmission (la quantité d'informations par unité de temps) est inférieur à celui correspondant à l'envoi d'un seul message : on a donc comme inconvénient une chute de débit. La durée de transmission totale est alors au mieux égale à *N* fois le temps de transmission d'un seul message.

## Répartition en fréquence ou « Frequency-DMA » (notée FDMA)

On transmet les *N* messages simultanément à partir de *N* émetteurs différents, chaque émetteur utilisant une bande étroite de fréquence qui lui est propre. Le système récepteur effectue les opérations appropriées pour restituer en parallèle les *N* messages à une amplitude près.

Les émetteurs n'ont plus à échanger d'informations entre eux et le débit obtenu reste identique au cas où il n'y a qu'un seul message à transmettre. Le prix à payer est une occupation fréquentielle accrue (elle est multipliée par *N*), ce qui peut amener à des risques d'interférence avec d'autres systèmes de transmission.

## Répartition en code ou « Code-DMA » (notée CDMA)

Cette technique utilisée en communication exclusivement numérique consiste à procéder à un étalement de spectre au moyen d'un code alloué à chaque message. Le récepteur utilise ce même code pour démoduler le signal qu'il reçoit et extraire l'information utile. Comme pour FDMA, CDMA permet de conserver un débit identique au cas où il n'y a qu'un seul message à transmettre. Toujours comme pour FDMA, l'occupation spectrale est augmentée, mais ici pour chaque message. Ainsi, outre les risques d'interférences avec d'autres émetteurs, on peut être confronté à des problèmes de dispersion de fréquences.

*On connaît par ailleurs de par le document* EP - A - 1 786 118 A1 *(Qualcomm) un système de transmission comprenant un système unique d'émission incluant plusieurs antennes appartenant à plusieurs émetteurs qui ne sont pas indépendants, mais qui au contraire coopèrent en tenant compte de ia connaissance au préalable des canaux de transmission. L'estimation du canal de transmission se fait par renvoi de signaux pilotes necessitant une concertation forte, à savoir une synchronisation, au niveau des émetteurs, ce qui ne peut convenir dans un cas comme celui visé par la présente invention où les émetteurs ne peuvent pas coopérer entre eux,*

## Conclusion sur l'extraction des messages dans les modes connus,

Dans le cas de transmissions réparties en fréquence, en temps ou en code, chaque message ayant été transmis de façon "séparée", il sera estimé à une amplitude près, à partir des signaux reçus et après inversion de la fonction *g* dans un cas général. Ces méthodes rappelées ici peuvent en pratique être déclinées selon une grande quantité de variantes qui, quelles qu'elles soient, se traduisent soit par une durée de transmission soit par un encombrement spectral proportionnel au nombre de messages à transmettre. Dans tous les cas, ces méthodes nécessitent que les différents émetteurs associés aux différents messages ne soient pas indépendants.

## *Utilisation* de la diversité spatiale avec un système MIMO

Dans le but de maintenir à la fois le débit et l'efficacité spectrale, on pourrait choisir d'émettre simultanément les *N* sources sur un même canal fréquentiel étroit en utilisant *N* antennes réparties dans l'espace. Le système de réception comprendrait *M* récepteurs élémentaires (antenne + changement de fréquence) en nombre supérieur ou égal au nombre *N* de sources. On parle de systèmes « Multiple-Input Multiple-Output », noté MIMO.

Le problème réside dans ce que chaque récepteur *i*, après changement de fréquence des signaux portés, restitue un mélange $y_i(t)$ qui est une combinaison linéaire des signaux d'information $x_j(t)$. Ceci n'est vrai que dans le cas de modulation d'amplitude ; pour une autre modulation, il suffit de remplacer *x* par *g(x)*. Chaque coefficient du mélange $h_{ij}$ caractérise chaque canal de transmission entre un émetteur *j* et un récepteur *i*.

L'ensemble des mélanges en fonction des sources s'écrit de manière synthétique sous la forme matricielle suivante :

$$y = H\,x$$

inversible, c'est-à-dire qu'il existe une matrice dite séparante notée ***B*** permettant de restituer le vecteur ***x*** à partir du vecteur ***y***.

Pour mener à bien la séparation des messages, il faut bien entendu réussir à séparer les signaux d'information en disposant de l'estimation d'une matrice ***B*** séparante. Cette matrice doit idéalement vérifier la relation ***BH=I,*** où ***I*** représente la matrice identité de dimension *N*. ***B*** correspond mathématiquement à une pseudo-inverse de la matrice de transfert du canal ***H***.

L'estimation d'une matrice séparante ***B*** peut être effectuée à l'aide de messages pilotes ou par des méthodes statistiques.

Les émissions pilotes sont effectuées de façon épisodique au cours du processus de transmission. Chaque émission pilote consiste en une émission séquentielle de signaux tests connus, permettant au système récepteur d'estimer une à une les différentes colonnes de la matrice de canal servant à la restitution des messages. Ces émissions présentent des inconvénients : la perte de débit durant l'émission pilote et surtout la nécessité d'une concertation entre les émetteurs.

Les méthodes statistiques, encore peu utilisées de façon industrielle, sont connues sous le nom de séparation aveugle des sources (« Blind Source Separation ») et exploitent l'indépendance statistique supposée des différents messages émis. Ces méthodes statistiques sont les seules à fournir une estimée d'une matrice séparante **B** dans le cas de transmissions mono-porteuse et simultanée de plusieurs messages sans coopération entre les émetteurs, et sans autre hypothèse sur les signaux d'information que l'indépendance statistique.

Le principal défaut de l'approche statistique repose cependant sur le caractère asymptotique de la solution obtenue : en l'absence de bruit, la matrice **B** obtenue ne sera parfaitement séparante que si le nombre de mesures est infini.

**BUTS DE L'INVENTION :**

Un but de l'invention est par conséquent de proposer un procédé et un dispositif de transmission hertzienne qui permettent de remédier aux inconvénients des procédés et systèmes de transmission connus.

Un autre but de l'invention est de proposer un procédé de transmission à émetteurs et récepteurs multiples, pouvant être mis en oeuvre à l'aide d'un dispositif simple reposant sur l'utilisation de modules d'émission standards légèrement adaptés, indépendants de la connaissance de la géométrie des antennes.

Un autre but fondamental de l'invention est de proposer un procédé de transmission dans lequel chaque émetteur peut travailler de manière indépendante c.à.d. sans stratégie à établir entre les différents émetteurs : pas de synchronisation, pas de codage partagé sur l'ensemble des émetteurs.

Un autre but de l'invention est de proposer un procédé de transmission présentant une grande efficacité spectrale et un faible encombrement spectral, susceptible de permettre la coexistence d'un grand nombre de réseaux de transmission de ce type par des occupations de bandes séparées.

Un autre but de l'invention est de proposer un procédé de transmission adapté à des transmissions sur de longues distances, et avec un temps de calcul inférieur au temps d'acquisition des données, ce qui permet un fonctionnement en temps réel.

Un autre but de l'invention est de proposer un procédé de transmission d'une grande polyvalence, et opérationnel sur tous types de signaux, notamment analogiques ou numériques.

En particulier, un but principal de l'invention est de permettre une estimation d'une matrice **B** parfaitement séparante (en l'absence de bruit), sans utilisation de messages pilotes. La contrepartie sera l'utilisation d'au moins deux sous-canaux étroits de fréquence.

A cet effet, l'invention a pour objet un procédé de transmission hertzienne simultanée d'un ensemble de N messages à partir d'une pluralité de N émetteurs vers un récepteur unique comportant une pluralité de $M$ antennes tel que $M$ soit supérieur ou égal à $N$, caractérisé en ce qu'il comporte des étapes consistant à :

- au niveau de chaque émetteur, et indépendamment des autres émetteurs :

  - décomposer (1) chaque message à émettre par ledit émetteur, en au moins deux sous-messages, tels que ces sous-messages soient complémentaires et orthogonaux;
  - moduler (2) à l'aide de chaque sous-message d'un même message, une sous-porteuse distincte associée, choisie de manière que les fréquences des sous-porteuses soient identiques d'un message à l'autre, et émettre les signaux des sous-messages ainsi portés dans des sous-canaux disjoints en fréquence, au moyen d'au moins une antenne électromagnétique par émetteur, ladite au moins une antenne étant adaptée au choix des sous-canaux et des sous-porteuses;

- au niveau de chaque antenne réceptrice du récepteur:

  - opérer un changement de fréquence du signal reçu de façon à obtenir un jeu de signaux reçus en bande de base, qui soit une combinaison linéaire des différents sous-messages ;
  - numériser de façon synchrone l'ensemble des signaux en bande de base fourni par l'ensemble des antennes réceptrices, de façon à obtenir un ensemble de signaux numérisés de l'ensemble des antennes réceptrices;
  - traiter numériquement ledit ensemble de signaux numérisés à l'aide d'un algorithme apte à construire des estimations des matrices séparantes associés aux sous-canaux de transmissions propres aux sous-messages, de façon à obtenir des estimations de ces matrices ;
  - séparer les différents sous-messages à partir des signaux numérisés et desdites matrices estimées des matrices séparantes associées aux sous-canaux.
  - dans le cas où la modulation utilisée n'est pas une modulation d'amplitude, il convient d'inverser numériquement à ce stade la fonction $g$ au niveau de chacun des signaux obtenus à l'étape précédente ;
  - estimer les $N$ messages originels par sommation pondérée des sous-messages estimés.

Selon une étape du procédé, on multiplie simultanément le signal reçu au niveau de chaque récepteur, par chacune desdites sous-porteuses utilisées à l'émission.

Selon l'invention, pour décomposer chaque message en au moins deux sous-messages dont une combinaison linéaire donne le message original (on parle de complémentarité) et dont un produit scalaire donne le signal nul (on parle d'orthogonalité), dans le cas d'une décomposition en deux sous-messages d'un message analogique (on parle de découpage bipolaire), on transmet ledit message analogique aux entrées de deux écrêteurs sans seuil complémentaires, choisis de manière que la tension obtenue en sortie de l'un desdits écrêteurs soit positive ou nulle, et que la tension obtenue en sortie de l'autre écrêteur soit négative ou nulle.

L'invention prévoit également l'utilisation d'un nouvel algorithme particulier, dit algorithme NSJAZ, pour construire des estimations de matrices séparantes au niveau des sous-canaux de transmissions propres aux sous-messages. Cet algorithme utilise la propriété d'orthogonalité des sous-messages obtenue par la décomposition d'un même message et est caractérisé en ce qu'il comporte les étapes suivantes :

- construire une matrice combinaison linéaire des matrices conjointement zéro-diagonalisables dont le rang est égal à $N$;
- décomposer la matrice obtenue en valeurs singulières ;
- projeter les matrices à zéro-diagonaliser sur le sous-espace défini par les vecteurs singuliers obtenus à l'étape précédente ;
- empiler en ligne les versions vectorisées des matrices projetées de manière à former une matrice possédant autant de lignes qu'il y a de matrices à zéro-diagonaliser et $N^2$ colonnes ;
- calculer une base du noyau de dimension $N$ de la matrice obtenue à l'étape précédente ;
- reconstruire en $N$ matrices les vecteurs de base du noyau selon un procédé inverse de la vectorisation ;
- construire une matrice inversible combinaison linéaire des matrices obtenues à l'étape précédente ;
- calculer les vecteurs propres du faisceau de matrices constitué par la première matrice issue du noyau et la matrice inversible et construire la matrice séparante du canal gauche en multipliant l'inverse de la matrice des vecteurs propres par la transposée des vecteurs singuliers gauches ;
- calculer les vecteurs propres du faisceau de matrices constitué par la transposée de la première matrice issue du noyau et la transposée de la matrice inversible, et construire la matrice séparante du canal droit en multipliant l'inverse de la matrice des vecteurs propres par la transposée des vecteurs singuliers droits.

L'invention a également pour objet un dispositif de transmission pour la mise en oeuvre du procédé de transmission selon l'une quelconque des revendications précédentes, caractérisé en ce qu'il comporte :

- un ensemble de $N$ émetteurs recevant en entrée des signaux d'information ($x_1$, ... $x_N$) à transmettre, ces émetteurs étant configurés pour être capables de décomposer chaque message à transmettre en au moins deux sous-messages tels qu'une combinaison linéaire particulière des sous-messages soit égale au message original et que leur produit scalaire soit nul, les émetteurs comportant en outre des moyens de modulation des sous-porteuses respectant la propriété d'orthogonalité au niveau des sous-messages d'un même message ;
- un ensemble de $M$ antennes réceptrices, $M$ étant un entier supérieur ou égal à $N,$ chaque antenne étant associée à un système de réception comportant des moyens pour séparer les sous-canaux associés aux différents sous-messages issus des émetteurs, des moyens de changement de fréquence pour transformer les signaux des sous-canaux en signaux en bande de base, et des moyens de numérisation pour numériser lesdits signaux en bande de base, en signaux numériques ;
- un calculateur numérique connecté

aux sorties desdits récepteurs, ledit calculateur étant agencé pour exécuter un algorithme NSJAZ d'estimation de matrices séparantes pour chaque sous-canal.

De façon avantageuse, dans le cas de la transmission de messages sous forme analogique et d'une décomposition de ces messages en deux sous-messages, le dispositif selon l'invention est tel que ses émetteurs comportent deux écrêteurs sans seuil complémentaires, auxquels les messages à émettre sont injectés, ces écrêteurs complémentaires étant aptes à délivrer en sortie deux sous-messages complémentaires et orthogonaux.

Les caractéristiques et avantages de l'invention seront mieux compris grâce à la description qui s'ensuit et qui se réfère aux figures, dans lesquelles :

- la Figure 1 est un organigramme fonctionnel du procédé de transmission selon l'invention ;
- la Figure 2 est un organigramme de l'algorithme NSJAZ pour l'identification des matrices séparantes au niveau de chaque sous-canal ;
- la Figure 3 est un organigramme fonctionnel d'un dispositif de transmission selon l'invention, dans le cas d'un découpage bipolaire des messages à transmettre ;
- la Figure 4 est un exemple de schéma de réalisation simplifié du dispositif de transmission de la Figure 3.
- la Figure 5 représente le schéma de réalisation simplifié d'un autre mode de réalisation du dispositif de transmission de la Figure 3.

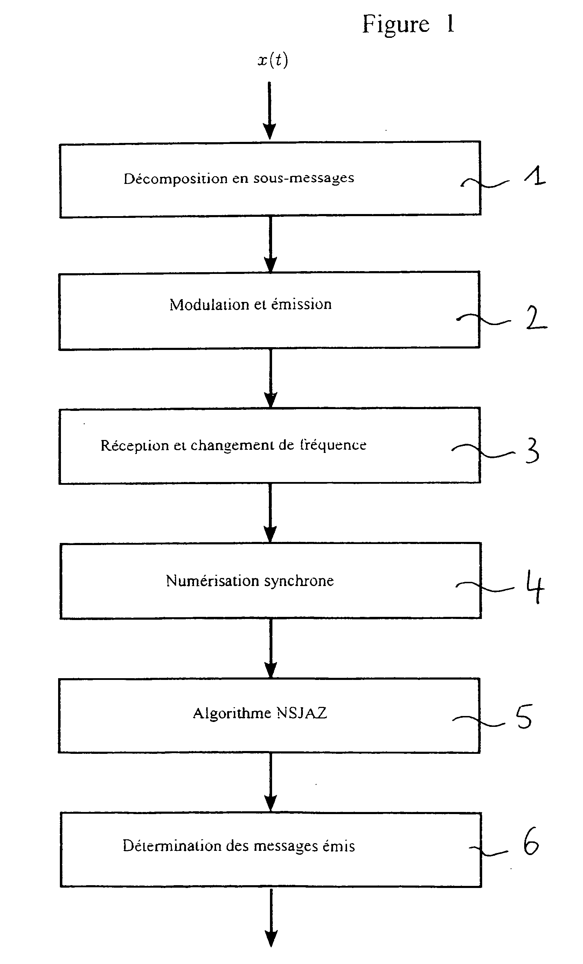

On se réfère à la Figure 1. Le principe de l'invention repose sur un procédé de découpage des ondes, que l'on peut appeler « SplitWaves » par référence au découpage en sous-messages ou « Zero Division Multiple Access » en terminologie anglo-saxonne par référence à la propriété d'orthogonalité, ou encore accès multiple par répartition de zéros, noté ZDMA.

Il s'agit d'un procédé hybride entre les méthodes à répartition (plus précisément FDMA et CDMA) et les méthodes utilisant la diversité spatiale. Ce procédé repose sur un découpage (une répartition) du message en sous-messages à envoyer sur plusieurs sous-canaux, à savoir notamment deux sous-canaux dans le cas optimal. Notons que le procédé utilise une technologie qui peut être comparée au procédé d'accès multiple par sautillement en fréquence ou « Frequency Hopping Multiple Access» (FHMA) en terminologie anglo-saxonne. Plusieurs différences fondamentales demeurent : en particulier, dans l'invention, les messages peuvent utiliser simultanément le même canal, et les sauts de fréquences sont « décidés » par le message lui-même.

Ce découpage permet une estimation exacte (dans le cas non bruité) et peu gourmande en nombre d'échantillons ($N^2 - N$, $N$ étant le nombre de messages) des matrices séparantes associées aux différents sous-canaux. Cette estimation repose sur un nouvel algorithme, appelé algorithme de zéro-diagonalisation conjointe non symétrique, noté NSJAZ, qui sera décrit plus en détail ci-dessous.

Ce découpage en sous-messages permet en outre une reconstruction des messages originels à partir de l'estimation des sous-messages obtenus.

L'association du découpage par sous-canal et de l'algorithme d'estimation des matrices de sous-canal sont les fondements du procédé de transmission selon l'invention. Le découpage peut être effectué d'un grand nombre de façons différentes mais on verra qu'une classe particulière de découpage présente un intérêt accru vis-à-vis du problème posé.

Description détaillée des étapes du procédé, du côté de l'émission :

Etape 1 : Chaque message à émettre est décomposé en sous-messages dont la combinaison linéaire donne le message originel et dont un produit scalaire donne le signal nul. Ces deux propriétés seront respectivement appelées propriété de complémentarité et propriété d'orthogonalité. Dans le cas où le découpage se limite à deux sous-messages, on parlera de sous-message "gauche" et de sous-message "droit".

Etape 2: Ensuite, on utilise les différents sous-messages d'un même message pour moduler autant de sous-porteuses, et on émet les signaux ainsi modulés. Dans le cas d'un découpage gauche-droite, on parlera naturellement de sous porteuses "gauche" et "droite". Les fréquences associées aux sous-porteuses sont identiques pour l'ensemble des messages. Les signaux modulés sont émis au moyen d'antennes électromagnétiques adaptées. Les sous-messages associés à un même message peuvent être émis depuis une même antenne. En revanche les émissions associées à des messages différents proviennent nécessairement d'antennes distinctes.

Description détaillée des étapes du procédé, du côté de la réception :

Etape 3 : On dispose d'un ensemble de récepteurs en nombre $M$ supérieur ou égal au nombre $N$ de messages à émettre. Chaque récepteur opère un changement classique de fréquence au niveau des différents sous canaux de façon à obtenir un jeu de signaux en bande de base associé aux différents sous-messages.

Etape 4 : On numérise de façon synchrone l'ensemble des signaux en bande de base fourni par l'ensemble des récepteurs.

Etape 5 : On traite numériquement à l'aide d'un algorithme tel que l'algorithme NSJAZ décrit plus loin, l'ensemble des signaux en bande de base en exploitant la propriété d'orthogonalité de façon à construire les estimations des matrices séparantes associées aux sous-canaux de transmissions propres aux sous-messages.

Etape 6: A partir des matrices séparantes estimées et des enregistrements en bande de base, on procède à une séparation des sous-sources. La propriété de complémentarité des sous-messages, permet ensuite l'estimation des messages originels sous une forme numérique par sommation pondérée (égalisation) des sous-messages correspondants.

Description détaillée de l'étape 1 : découpage en sous-messages

On se place au niveau d'un émetteur. Les autres émetteurs seront construits sur le même principe.

Chaque émetteur a en charge l'émission d'un message qui lui est propre. On peut envisager différentes stratégies pour effectuer le découpage ad hoc du message en sous-messages. Ces stratégies diffèrent aussi bien au niveau du choix du nombre de sous-messages que des critères utilisés pour le découpage. On se contentera ici de détailler à titre d'exemple une technique analogique simple, utilisable dans le cas d'un découpage en deux sous-messages dont le produit simple est nul. Cependant, toute autre forme de découpage complémentaire et orthogonal peut être envisagée.

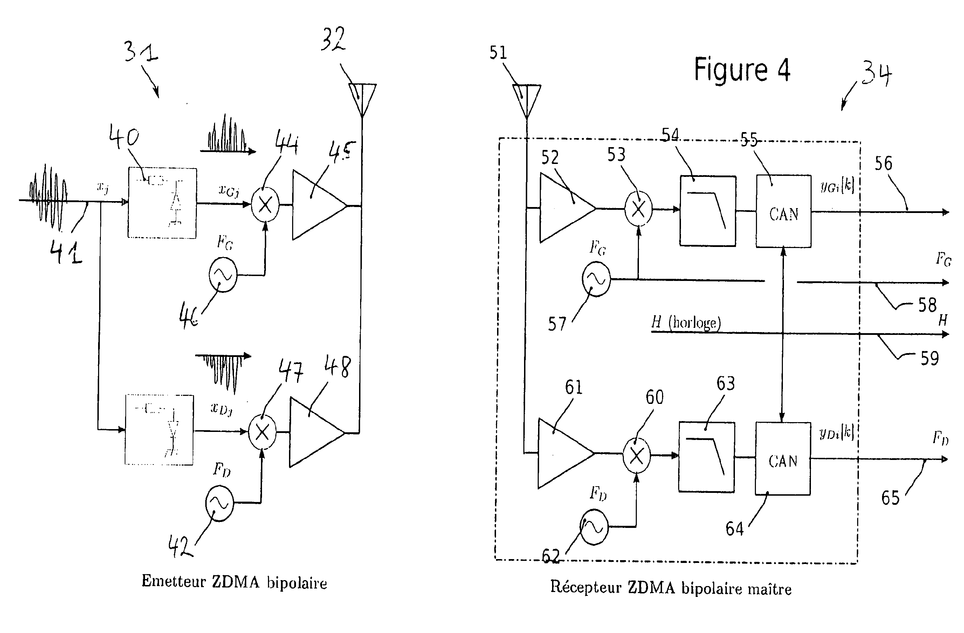

On suppose ici que le message d'origine à transmettre se présente sous la forme d'une tension analogique. Comme décrit en relation avec la Figure 4, le signal de tension analogique est injecté sur les entrées de deux écrêteurs sans seuil complémentaires composés d'un amplificateur opérationnel et d'une diode de redressement. On parlera d'écrêteur "gauche" et d'écrêteur "droit". La convention droite/gauche sera choisie, par exemple, pour que la tension obtenue en sortie de l'écrêteur "gauche" soit positive ou nulle tandis que la tension obtenue en sortie de l'écrêteur "droit" sera négative ou nulle. Les tensions obtenues en sortie des deux écrêteurs sont par construction complémentaires et orthogonales dans la mesure où la somme donne la tension à l'entrée et où le produit donne une tension nulle. On utilisera le terme de découpage bipolaire pour nommer cette technique de découpage.

Description détaillée de l'étape 2 : émission des sous-messages

Au niveau de chaque émetteur, les tensions associées aux différents sous-messages modulent chacune l'amplitude, la phase ou la fréquence d'une onde porteuse distincte de telle sorte que la propriété d'orthogonalité des émissions en bande de base soit conservée.

Dans le cas du découpage bipolaire, la tension analogique "gauche" module l'amplitude, la phase ou la fréquence d'une porteuse "gauche". La tension analogique "droite" module l'amplitude, la phase ou la fréquence d'une porteuse "droite". Les signaux modulés sont éventuellement amplifiés puis émis au moyen d'une antenne ou de plusieurs antennes électromagnétiques adaptées.

Description détaillée de l'étape 3 : réception et changement de fréquence

On se place au niveau d'une antenne réceptrice. Les autres récepteurs associés seront construits sur le même principe.

Le signal reçu par l'antenne passe dans une batterie de filtres passe-bande de façon à séparer les sous-canaux associés aux différents sous-messages. On procède ensuite à un changement de fréquence au niveau de chaque sous-canal de façon à obtenir autant de signaux en bande de base. Chaque signal en bande de base obtenu contient un mélange linéaire inconnu des sous-messages provenant d'émetteurs distincts.

Description détaillée de l'étape 4 : numérisation des signaux en bande de base

L'ensemble des signaux en bande de base fourni par les différents récepteurs est numérisé au moyen d'un système d'acquisition de données convenable que l'homme du métier n'aura pas de mal à déterminer. Ce système devra effectuer une acquisition synchrone des signaux au niveau de chaque récepteur et pour l'ensemble des récepteurs.

Description détaillée de l'étape 5 : identification des matrices séparantes associées à chaque sous-canal

Pour une sous-bande donnée, l'ensemble des signaux traité selon les étapes 3 et 4 et fourni par les différents récepteurs constitue des mélanges linéaires de signaux échantillonnés dont chacun est associé à des sous-messages provenant d'émetteurs distincts et indépendants. Les coefficients inconnus de ces mélanges sont les éléments de la matrice de transfert caractérisant le sous canal. Dans le cas d'un découpage bipolaire, on parlera uniquement de matrices de transfert "gauche" et "droite" notées $H_G$ et $H_D$.

Les enregistrements numériques fournis par le système d'acquisition sont fournis comme entrées à un module de calcul mettant en oeuvre un algorithme original, noté algorithme NSJAZ, qui sera décrit plus loin.

Cet algorithme exploite la propriété d'orthogonalité des sous-messages provenant d'un même message dans le but d'estimer les matrices séparantes associés à chaque sous-canal.

En sortie de l'algorithme NSJAZ, pour chaque sous-canal, on dispose donc d'une matrice de coefficients établissant le lien entre les enregistrements numériques et les sous-messages émis.

Il y a malgré tout des indéterminations, inhérentes au problème posé, et qui sont les suivantes :

- Indétermination 1 : la commutativité de l'addition ne permet pas d'établir un ordre dans le mélange des sous-messages entrant en jeu dans un enregistrement. Par conséquent si les différentes sous-sources sont nommées, les coefficients estimés correspondants ne le sont pas. En d'autres termes si les matrices séparantes estimées permettent de remonter aux différents sous-messages transmis, elles ne permettent pas de remonter aux noms des messages. Par contre l'algorithme délivre un ordonnancement des coefficients qui bien qu'arbitraire reste le même dans toutes les matrices, donc pour l'ensemble des sous-messages.
- Indétermination 2 : pour l'ensemble des enregistrements d'un même sous-canal, les coefficients correspondants à un même sous-message sont estimés à un facteur près.

Description technique des étapes de l'algorithme NSJAZ

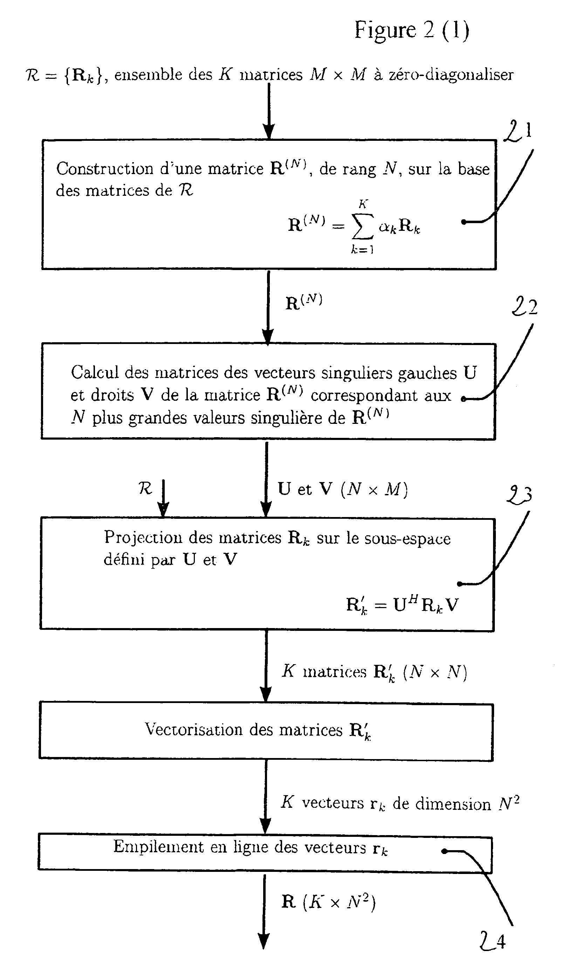

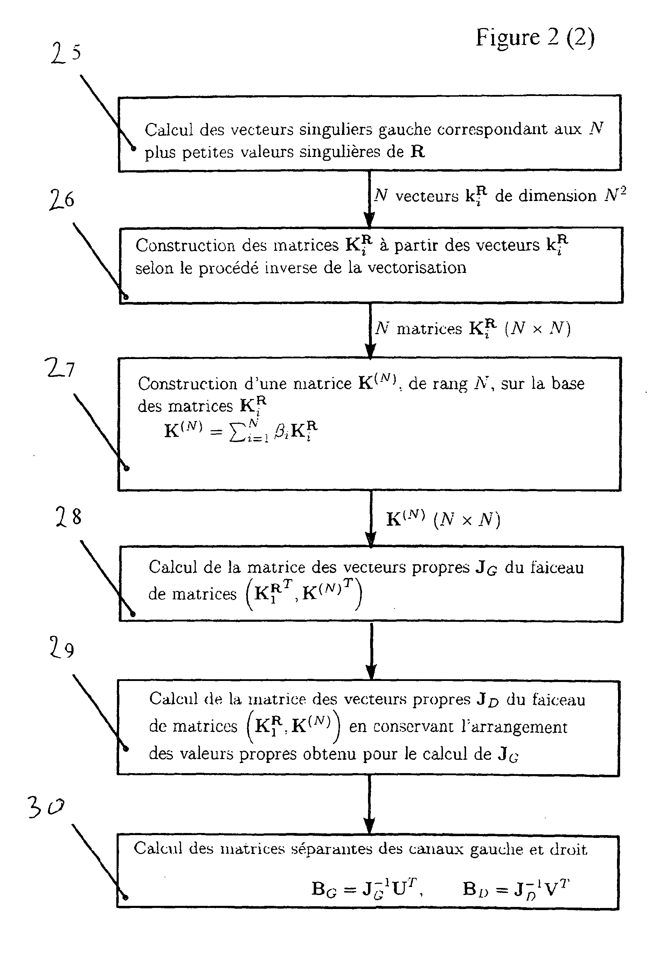

On va maintenant décrire plus en détail l'algorithme NSJAZ, en relation avec la figure 2. L'algorithme NSJAZ est un algorithme numérique destiné à permettre le traitement de l'ensemble des enregistrements en bande de base obtenus à l'étape 5 du procédé ci-dessus, dans le but d'identifier les matrices séparantes associées aux différents sous-canaux de fréquence en exploitant l'orthogonalité des sous-messages.

On commence par décrire l'algorithme dans le cas d'un découpage bipolaire. La généralisation au cas où il y a plus de deux sous-canaux est possible. Pour assurer la clarté de la description, on définit un certain nombre de constantes et de variables : $N$ désigne le nombre de messages et l'indice $j$ permet d'indexer un message donné. Le nombre d'antennes réceptrices est $M$ (tel que $M$ est supérieur ou égal à $N$).

Une antenne sera repérée par son indice $i$. Le nombre d'échantillons disponibles sur chaque enregistrement est $K$. On utilisera l'indice $k$ pour pointer un échantillon courant. Le nombre de sous-messages associé à un même message (ou encore le nombre de sous-canaux) est *P*. Un sous-canal donné sera indexé par *p*. Le nombre $y_{i,p}[k]$ désigne le *k*-ième échantillon enregistré par le récepteur *i* dans le sous-canal *p*. Le vecteur colonne $y_p[k]$ rassemble l'ensemble des échantillons d'indice *k* collectés par l'ensemble des récepteurs dans le sous-canal *p*.

Dans le cas où seuls deux sous-canaux sont considérés (*p* appartient à {1, 2}), il est plus simple de parler de sous-canaux "gauche" et "droit" et on préférera remplacer $y_1[k]$ par $y_G[k]$ et $y_2[k]$ par $y_D[k]$. Pour chaque échantillon, chaque enregistrement du sous-canal droit (respectivement gauche) est constitué d'un mélange linéaire de *N* sous-messages émis rassemblés dans le vecteur colonne $x_D[k]$ (respectivement $x_G[k]$). Chaque échantillon de chaque sous-message droit fait un produit nul avec son homologue gauche.

L'ensemble des enregistrements du canal droit (respectivement gauche) est lié à l'ensemble des sous-messages droit (respectivement gauche) par la matrice de transfert du canal droit $H_D$ (respectivement gauche $H_G$) :

$$y_D[k] = H_D x_D[k]$$

$$y_G[k] = H_G x_G[k]$$

Dans le cas du découpage bipolaire, la propriété d'orthogonalité des sous-messages gauche et droit associées à un même message se traduit par le fait que, quel que soit *k* appartient à {1, ... *K*}, les matrices $Z_k = x_G[k]x_D^T[k]$ sont des matrices dont la diagonale est remplie de zéros (on parle de matrice zéro-diagonale).

Si l'on forme les matrices $R_k = y_G[k]y_D^T[k]$, on obtient alors pour tous les *k*:

$$R_k = H_G Z_k H_D^T$$

On dit que les matrices des sous-canaux $H_G$ et $H_D$ vérifient un problème de zéro-diagonalisation conjointe non symétrique. On montre que ce problème peut être résolu en le ré-exprimant en deux problèmes de diagonalisation conjointe symétrique. C'est l'objet de l'algorithme NSJAZ. Notons que dans le cas d'un découpage autre que bipolaire, il conviendra d'effectuer le produit scalaire *ad hoc* pour construire les matrices $R_k$ qui conviennent.

Après calculs, l'algorithme NSJAZ délivre deux matrices $B_D$ et $B_G$ représentant les estimées des matrices séparantes associées aux sous-canaux gauche et droit aux indéterminations 1 et 2 près. C'est-à-dire que l'on a dans un cas idéal les relations : $B_G H_G = D_G P$ et $B_D H_D = D_D P$.

La matrice **P** est une matrice de permutation modélisant l'indétermination 1. Les matrices $D_G$ et $D_D$ sont des matrices diagonales modélisant l'indétermination 2.

## Description de l'algorithme NSJAZ

L'algorithme opère sur les *K* matrices $R_k$ dont la construction à partir des enregistrements numériques fournis par les différents récepteurs dépend du type de découpage considéré.

Les étapes de cet algorithme sont données ci-dessous en relation avec la Figure 2, dans le cas d'un découpage en deux sous-canaux :

En 21, on calcule une matrice carrée d'ordre *M*, $R^{(N)}$ combinaison linéaire des matrices $R_k$ telle que $R^{(N)}$ soit de rang *N*;

En 22, on effectue une décomposition en valeurs singulières de la matrice $R^{(N)}$. On obtient deux matrices $(M \times N)$ *U* et *V* contenant les vecteurs singuliers gauche et droit associés aux valeurs singulières non nulles de $R^{(N)}$;

En 23, on construit les *K* matrices carrées d'ordre *N*, notées $R'_k$ en calculant les produits $U^T R_k V$, *k* appartenant à {1, .. ,k}. L'exposant $^T$ représente l'opérateur de transposition;

En 24, on forme la $(K \times N^2)$ matrice **R** dont, quel que soit *k,* la *k*-ième ligne est formée par le dépliement des *N* colonnes de la matrice $R'_k$ (on parle de vectorisation);

En 25, on estime une base du noyau de la matrice **R** en prenant les *N* vecteurs singuliers gauche associés aux N plus petites valeurs singulières de **R**. Chacun de ces vecteurs notés $k_i^R$ comporte $N^2$ éléments ;

En 26, on replie en colonne chacun des *N* vecteurs $k_i^R$ calculés dans l'étape 5 de façon à obtenir *K* matrices carrées d'ordre *N*, $K_i^R$. Le repliement correspond à l'opération inverse de la vectorisation ;

En 27, on calcule la matrice carrée d'ordre N, $K^{(N)}$ combinaison linéaire des matrices $K_i^R$ telle que $K^{(N)}$ soit de rang *N*;

En 28, on calcule $J_D$ la matrice carrée d'ordre *N* des vecteurs propres du faisceau de matrices $(K^{(N)}, K_1^R)$;

En 29, on calcule $J_G$ la matrice carrée d'ordre N des vecteurs propres du faisceau de matrices $(K^{(N)\ T},$

$K_1{}^{RT}$) en conservant l'arrangement des valeurs propres de l'étape 28 ;

En 30, on obtient l'estimée de la matrice séparante $B_D$ du sous-canal "droit" en calculant le produit $J_D{}^{-1}V^T$. On obtient l'estimée de la matrice séparante $B_G$ du sous-canal "gauche" en calculant le produit $J_G{}^{-1}U^T$. L'exposant $^{-1}$ représente l'opérateur d'inversion matricielle.

<u>Généralisation de l'algorithme NSJAZ à plus de deux sous-canaux :</u>

Dans le cas où il convient d'estimer les matrices de transfert correspondant à $P > 2$ sous canaux, il suffit d'exécuter au moins $P$ - 1 fois l'algorithme NSJAZ tel que décrit ci-dessus dans le cas bipolaire, en remplaçant les indices "gauche" et "droit" par, successivement et par exemple, 1 et 2, 1 et 3, ..., 1 et $P$. On obtient ainsi, dans l'ordre, les estimations des matrices de transfert des sous-canaux 1, 2, ..., $P$. L'utilisation d'un sous-canal de référence (ici le sous-canal 1) permet de conserver la maîtrise des permutations.

<u>Description détaillée de l'étape 6 de la Figure 1: estimation des messages originels</u>

Il est à noter que dans le cas où il s'agit de simplement déterminer des caractéristiques de canaux de transmission et donc d'identifier des matrices de sous-canaux, le processus selon l'invention peut s'arrêter en fin de l'étape précédente, sans qu'il y ait besoin de récupérer les messages originels du côté récepteur. En effet, des estimations des matrices de transfert des sous-canaux s'obtiennent directement à partir des matrices séparantes associées en calculant par exemple les pseudo-inverses de More-Penrose.

Dans le cas contraire où le problème visé est bien un problème de transmission de messages entre des émetteurs et des récepteurs, il s'agira de récupérer du côté des récepteurs, les signaux (ou messages) transmis par les émetteurs.

Les matrices séparantes correspondant aux différents sous-canaux ayant été estimées en aveugle, il est maintenant possible de procéder du côté du récepteur à l'estimation de l'ensemble des messages transmis à l'origine. Cette estimation des messages originels comporte les étapes suivantes, qui peuvent être partiellement fusionnées ou non selon le cas :

<u>Etape 6-1 : estimation des sous-messages :</u>

Plusieurs méthodes sont envisageables pour cette estimation, selon la nature des signaux (analogiques ou numériques) et selon le critère employé (optimisation du rapport signal à interférences et/ou du rapport signal à bruit).

Par exemple dans le cas de l'optimisation du rapport signal à interférences, on pré-multiplie les enregistrements par les différentes matrices séparantes, de façon à obtenir les estimations des différents sous-messages émis ordonnées selon les messages auxquels elles se rapportent. Rappelons que dans le cas d'une modulation autre que d'amplitude, il convient d'inverser à ce niveau l'effet de la fonction $g$.

A l'issue de l'estimation des sous-messages, on dispose, pour chaque message originel, de l'estimation des différents sous-messages sur lesquels il a été découpé.

<u>Etape 6-2 : égalisation de l'amplitude des sous-messages :</u>

On dispose désormais, pour chaque message, de l'estimation des différents sous-messages sur lesquels il a été découpé. Mais ces sous-messages sont estimés à une amplitude et un signe près (indétermination 2). Il faut maintenant égaliser ces amplitudes de façon à pouvoir reconstruire le message originel par sommation. Plusieurs techniques sont envisageables en fonction de la nature des signaux transmis (en particulier analogique ou numérique) et en fonction du type de découpage utilisé. On peut en citer quelques unes à titre d'exemple.

- Dans le cas où les messages sont numériques :

La valeur des symboles transmis au niveau de chaque sous-canal est alors connue et il sera possible d'estimer les facteurs d'amplitude inconnus.

On peut par exemple considérer le cas où le symbole de plus grande valeur ou de plus petite valeur est reçu sur chaque sous-canal.

Quand la distance entre deux symboles consécutifs est constante, il est possible d'estimer les facteurs d'amplitude lorsque deux symboles consécutifs sont reçus sur chaque sous-canal.

- Dans le cas où les messages sont analogiques, de moyenne nulle (centrés), et dans le cas où le découpage est bipolaire.

Un facteur d'échelle relatif entre les sous-messages gauche et droit pourra être estimé de façon à centrer la somme pondérée des deux sous-messages.

<u>Etape 6-3 : estimation des messages :</u>

L'estimation des messages d'origine est obtenue à partir de la sommation des sous-messages égalisés correspondants.

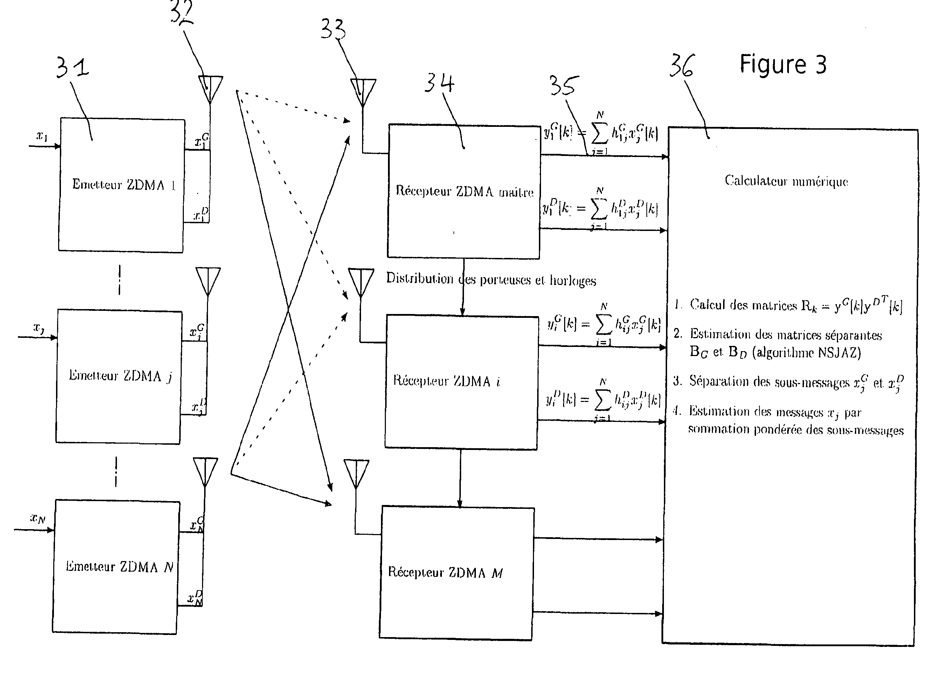

On a représenté en Figure 3 un organigramme fonctionnel d'un dispositif de transmission apte à mettre en l'oeuvre le procédé selon l'invention, dans le cas d'un découpage bipolaire des messages à transmettre et dans le cas d'une modulation d'amplitude.

Des signaux $x_1$, $x_2$, ... $x_N$ sont fournis en entrée à des émetteurs ZDMA 31 qui décomposent ces signaux respectifs en une partie droite, $x_j^D$, et une partie gauche $x_j^G$, qui sont alors émis au moyen de l'antenne 32 de chaque émetteur 31 respectif. A la réception, des antennes 33 solidaires chacune d'un récepteur ZDMA 34, captent les signaux émis et calculent les vecteurs $y_G$ [k] et $y_D$[k] tel qu'expliqué précédemment. Ces valeurs sont transmises par chaque récepteur 34, à un calculateur numérique 36 qui calcule les matrices à zéro-diagonaliser $R_k$ précédemment décrites et implémente l'algorithme NSJAZ tel que décrit précédemment. En conséquence, il délivre en sortie une estimation des matrices séparantes associées aux sous-canaux $B_G$ et $B_D$ tel que décrit précédemment, et qui serviront à l'estimation des sous-messages $x_j^G$ et $x_j^D$ des différents signaux d'entrée $x_j$, puis à la recomposition des messages $x_j$, selon l'étape 6 du procédé global, comme décrit en relation avec la Figure 1.

En Figure 4, on a donné un premier exemple de réalisation plus détaillé des émetteurs 31 et des récepteurs 34. Le message $x_1$ à transmettre est injecté en parallèle sur deux écrêteurs à diode 40, 42 qui délivrent en sortie respectivement un message gauche $x_1^G$ entièrement positif ou nul et un message droit $x_1^D$ entièrement négatif ou nul. Chacun desdits messages est multiplié respectivement par un signal de fréquence $F_G$ par un multiplieur 44, et par un signal de fréquence $F_D$ par un multiplieur 47. La sortie des multiplieurs 44, 47 est amplifiée à l'aide d'amplificateurs HF 45, 48, et émise par l'intermédiaire de l'antenne 32.

Du côté de la réception, le signal analogique transmis est reçu par l'antenne 51 et transmis à des filtres 52, 61, dont les signaux de sortie sont transmis à des multiplieurs 53,60 qui procèdent à un changement de fréquence à l'aide respectivement des fréquences porteuses $F_G$ et $F_D$. La sortie des multiplieurs est transmise à des filtres respectifs 54,63, et à des convertisseurs numériques analogiques 55,64 qui restituent en sortie les signaux numériques $y_i^G$[k] et $y_i^D$[k].

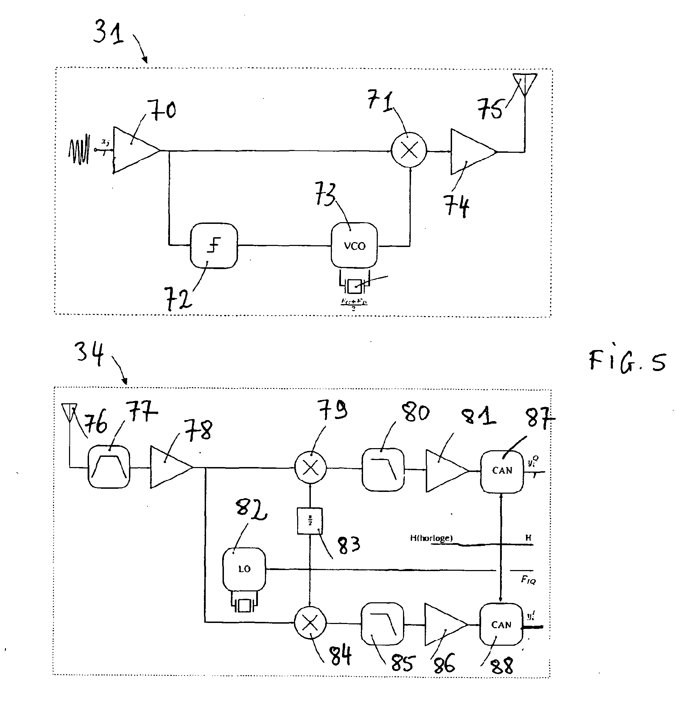

En Figure 5, on donne un autre exemple de réalisation des émetteurs 31 et des récepteurs 34. Il est important de noter que dans cette variante, le découpage des messages en deux sous-messages n'apparaît plus de façon explicite même s'il demeure conceptuellement.

En ce qui concerne l'émetteur, cette variante met en oeuvre une modulation par saut de fréquence avec continuité de phase ce qui permet de réduire sensiblement la bande passante des sous-messages produits.

En ce qui concerne le récepteur, la variante opère un changement de fréquence en phase et en quadrature (IQ) ce qui permet de s'affranchir d'une éventuelle dérive de l'oscillateur local des récepteurs par rapport aux fréquences porteuses $F_G$ et $F_D$.

Au niveau d'un émetteur, le message $X_j$ à transmettre est injecté simultanément sur l'entrée d'un comparateur 70 et sur l'entrée d'un multiplieur 71.

Le comparateur 70 est construit de telle sorte qu'il fournisse une tension $V_G$ lorsque le message est positif et une tension $V_D$ distincte lorsque le message est négatif ou nul. La tension de sortie du comparateur 70 est injectée sur l'entrée de contrôle d'un oscillateur contrôlé en tension (VCO) 73. Le VCO 73 est construit pour osciller à la fréquence $F_G$ lorsque sa tension de contrôle est égale à $V_G$ et à la fréquence $F_D$ lorsque sa tension de contrôle est égale à $V_D$. La tension de sortie du VCO est injectée sur l'autre entrée du multiplieur 71. La sortie du multiplieur 71 est amplifiée à l'aide d'un amplificateur opérationnels HF passe-bande 74 et émise par l'intermédiaire de l'antenne 75. L'ensemble du système émetteur 31 réalise en quelque sorte une modulation hybride du type modulation par saut de fréquence avec continuité de phase / modulation d'amplitude (CPFSK/AM).

Du côté de la réception, le signal analogique transmis reçu par l'antenne 76 passe classiquement par un filtre passe-bande 77 destiné à ne sélectionner que la bande de fréquence utilisée par les deux sous-messages transmis. Le signal traverse ensuite un amplificateur faible bruit (LNA) 78. Le signal est enfin transmis à des multiplieurs 79,84 qui procèdent à un changement de fréquence IQ à l'aide d'un oscillateur local LO 82 délivrant deux sinusoïdes en quadrature de phase. La fréquence $F_{IQ}$ est choisie inférieure à la plus basse (ou supérieure à la plus haute) des fréquences de la bande de fréquence utilisée par les deux sous-messages transmis. La sortie des multiplieurs 79,84 est transmise à des filtres passe-bas respectifs 80,85 des amplificateurs BF 81,86 puis à des convertisseurs numériques analogiques 87,88 qui restituent en sortie les signaux numériques $y_{iGi}^I$[k] et $y_i^Q$ $y_{Di}$[k]. Les signaux $y_{iGi}^G$[k] et $y_{iGi}^D$[k] sont enfin obtenu par filtrage numérique passe-bas et passe-haut du module du signal complexe IQ $(| y_{iGi}^I$[k] $+$ j $y_{iGi}^Q$[k] |)$.

**RESUME ET AVANTAGES DE L'INVENTION :**

En définitive, le procédé selon l'invention est un procédé de transmission hertzienne, à très haut débit et à forte efficacité spectrale, de messages non coordonnés en provenance d'émetteurs indépendants et utilisant plusieurs antennes à l'émission et à la réception (MIMO).

Cette technologie permet un accès multiple simultané sur un canal fréquentiel découpé en un minimum de deux sous-canaux étroits. Les matrices séparantes associées aux différents sous-canaux sont identifiées de façon aveugle.

Le procédé et le dispositif de transmission selon l'invention présentent un grand nombre d'avantages par rapport à l'état de la technique.

**1. Mise en oeuvre matérielle simple :**

- La mise en oeuvre d'un tel système repose sur l'utilisation de modules d'émission standards précédés par un simple module d'écrêtage sans seuil.
- Le traitement proposé n'est pas un traitement d'antenne et ne nécessite donc pas la connaissance de la géométrie de l'antenne réceptrice.
- Chaque émetteur ZDMA peut travailler de manière indépendante c.à.d. sans stratégie à établir entre les différents émetteurs : pas de synchronisation, pas de codage partagé sur l'ensemble des émetteurs. Il est donc possible d'appliquer le procédé selon l'invention en téléphonie.

   **2**. **Efficacité spectrale** : En transmission numérique, il est théoriquement possible d'obtenir une efficacité spectrale importante. En effet, le débit binaire du système correspondra à $N$ fois le débit binaire pour un seul émetteur. La configuration la plus efficace spectralement est celle où seuls deux sous-canaux sont utilisés.

   **3. Faible encombrement spectral :** Chaque émetteur utilisant les deux mêmes bandes étroites fréquences, la coexistence d'un grand nombre de réseaux de transmission de ce type est envisageable.

   **4. Portée :** La transmission des signaux écrêtés sur chaque porteuse n'induit pas d'étalement sensible en fréquence. La variante présentée en figure 5 permet de limiter de façon encore plus sensible le risque d'étalement en fréquence. L'utilisation du système sur deux bandes étroites de fréquences permet d'envisager des émissions sur de longues distances.

   **5. Rapidité: temps réel :**
   L'identification des deux canaux MIMO est effectuée sur un nombre $K$ d'échantillons réduit : en théorie $K=N^2-N$ dans un cas non bruité.

   **6. Polyvalence :** Le système proposé repose sur une exploitation originale des deux sous-canaux de transmission. L'algorithme n'exploite aucune caractéristique (statistique ou spectrale) particulière des signaux à transmettre, il est donc opérationnel sur tout type de signaux. Les signaux émis $x_j$ peuvent être des signaux analogiques ou numériques et tout type de modulation peut être envisagé : AM, FM, PM, etc. L'application la plus simple à mettre en oeuvre reste cependant la modulation d'amplitude.

   7. Robustesse : Des simulations ont montré que le système reste efficace en présence de bruit.

Originalité de l'invention :

Sans hypothèse supplémentaire sur les sources à émettre, il n'existe pas de système équivalent permettant la transmission simultanée de plusieurs signaux sans avoir recours à un multiplexage temporel, à un multiplexage fréquentiel ou encore sans faire appel à des techniques d'étalement de spectre.

Applications de l'invention :

L'intérêt principal du procédé et du système selon l'invention réside sans doute dans le fait de pouvoir traiter des cas de transmissions multiples sans que des signaux de synchronisation ou des protocoles particuliers entre émetteurs ou entre les émetteurs et le système de réception, soient nécessaires. Ce type de configuration peut se rencontrer par exemple dans le cas où les conditions de transmissions entre les émetteurs, ou du récepteur vers les émetteurs, ne sont pas favorables ou encore lorsqu'il est nécessaire que le récepteur reste discret d'un point de vue électromagnétique. Dans ces conditions, parmi les applications potentielles principales du procédé, on trouvera entre autres les applications de téléphonie mobile ou de façon générale tout système de télécommunication terrestre militaire ou civil.

On peut également citer parmi les applications potentielles, l'utilisation dans le cadre de réseaux de communication hertzien à grande ou moyenne échelle, comme dans le domaine de la téléphonie mobile.

Mais d'autres applications, non limitatives, vont sans doute apparaître, comme par exemple :

- la constitution de micro-réseaux hertziens de capteurs pour des applications en domotique ou dans des exploitations agricoles ;
- ou encore lorsque dans un réseau de transmission hertzienne à haut débit, un signal est déployé sur un ensemble d'émetteurs travaillant de façon concertée pour augmenter le débit de transmission.
- ou encore, l'utilisation du procédé de transmission dans un système de positionnement ou de guidage hertzien d'un récepteur dans le cas où la position des émetteurs est connue.

**Revendications**

**1.** Procédé de transmission hertzienne simultanée d'un ensemble de messages à partir d'une pluralité de $N$ émetteurs indépendants (31) utilisant chacun au moins une antenne électromagnétique (32), vers des récepteurs (34) comportant une pluralité de *M* antennes réceptrices (33) tel que *M* soit supérieur ou égal à *N*, **caractérisé en ce qu'**il comporte des étapes consistant à :

- au niveau de chacun desdits N émetteurs indépendants (31), et indépendamment des autres émetteurs :

- décomposer (1) chaque message à émettre par chacun desdits N émetteurs indépendants (31) en au moins deux sous-messages, tels que ces sous-messages soient complémentaires et orthogonaux;
- moduler (2) à l'aide de chaque sous-message d'un même message, une sous-porteuse distincte associée, choisie de manière que les fréquences des sous-porteuses soient identiques d'un message à l'autre, et émettre les signaux des sous-messages ainsi portés dans des sous-canaux disjoints en fréquence, au moyen de ladite au moins une antenne électromagnétique (32) de chacun desdits N émetteurs indépendants (31), ladite au moins une antenne électromagnétique (32) étant adaptée au choix des sous-canaux et des sous-porteuses;

- au niveau de chacune desdites M antennes réceptrices (33) recevant les signaux des sous-messages de l'ensemble des N émetteurs indépendants (31):

- opérer (3) un changement de fréquence du signal reçu de façon à obtenir un jeu de signaux reçus en bande de base, combinaisons linéaires des différents sous-messages ;
- numériser (4) de façon synchrone l'ensemble des signaux en bande de base fourni par l'ensemble des M antennes réceptrices (33) de façon à obtenir un ensemble de signaux numérisés de l'ensemble des M antennes réceptrices (33);
- traiter (5) numériquement ledit ensemble de signaux numérisés à l'aide d'un algorithme apte à construire des estimations de matrices séparantes associées aux sous-canaux de transmissions propres aux sous-messages, de façon à obtenir des estimations desdites matrices séparantes associés aux sous-canaux propres aux sous-messages.

2. Procédé selon la revendication 1, **caractérisé en ce que**, pour obtenir une estimation des messages originels émis par les *N* émetteurs indépendants (31), on commence par effectuer une estimation séparée des sous-messages à partir desdits signaux numérisés et desdites matrices estimées des matrices séparantes associées aux sous-canaux, puis les messages originels sont obtenus par une sommation pondérée des sous-messages estimés.

3. Procédé selon la revendication 1, **caractérisé en ce que** pour opérer ledit changement de fréquence (3) du signal reçu, on multiplie simultanément le signal reçu au niveau de chaque antenne réceptrice (33), par chacune desdites sous-porteuses utilisées à émission.

4. Procédé de transmission selon l'une quelconque des revendications précédentes, **caractérisé en ce que** pour décomposer (1) chaque message en au moins deux sous-messages dont une combinaison linéaire donne le message originel et dont un produit scalaire donne le signal nul, dans le cas d'une décomposition en deux sous-messages d'un message analogique, on transmet ledit message analogique aux entrées de deux écrêteurs sans seuil complémentaires (40,42), choisis de manière que la tension obtenue en sortie de l'un (40) desdits écrêteurs soit positive ou nulle, et que la tension obtenue en sortie de l'autre écrêteur (42) soit négative ou nulle.

5. Procédé de transmission selon la revendication 1 ou la revendication 2, **caractérisé en ce que** ledit algorithme pour construire des estimations de matrices séparantes associées aux sous-canaux de transmissions propres aux sous-messages, est un algorithme de zéro-diagonalisation conjointe non symétrique, noté NSJAZ, qui utilise la propriété d'orthogonalité des sous-messages obtenus par la décomposition d'un même message et se traduisant par la disponibilité d'un ensemble de matrices conjointement zéro-diagonalisables de façon non symétrique obtenues à partir des signaux numérisés.

6. Procédé de transmission selon la revendication 5, **caractérisé en ce que** l'algorithme NSJAZ comporte les étapes consistant à :

- construire une matrice combinaison linéaire des matrices conjointement zéro-diagonalisables dont le rang est égal à *N* ;
- décomposer la matrice obtenue en valeurs singulières ;
- projeter les matrices à zéro-diagonaliser sur le sous-espace défini par les vecteurs singuliers obtenus à l'étape précédente ;
- empiler en ligne les versions vectorisées des matrices projetées de manière à former une matrice possédant autant de lignes qu'il y a de matrices à zéro-diagonaliser et $N^2$ colonnes ;
- calculer une base du noyau de dimension *N* de la matrice obtenue à l'étape précédente ;

- reconstruire en N matrices les vecteurs de base du noyau selon un procédé inverse de la vectorisation ;
- construire une matrice inversible combinaison linéaire des matrices obtenues à l'étape précédente ;
- calculer les vecteurs propres du faisceau de matrices constitué par la première matrice issue du noyau et la matrice inversible, et construire la matrice séparante du canal gauche en multipliant l'inverse de la matrice des vecteurs propres par la transposée des vecteurs singuliers gauches ;
- calculer les vecteurs propres du faisceau de matrices constitué par la transposée de la première matrice issue du noyau et la transposée de la matrice inversible, et construire la matrice séparante du canal droit en multipliant l'inverse de la matrice des vecteurs propres par la transposée des vecteurs singuliers droits.

**7.** Dispositif de transmission pour la mise en oeuvre du procédé de transmission selon l'une quelconque des revendications précédentes, **caractérisé en ce qu'**il comporte :

- un ensemble de $N$ émetteurs indépendants (31) recevant en entrée des messages ($x_1, ... x_N$) à transmettre, chacun de ces N émetteurs indépendants (31) étant configurés pour être capables de décomposer chaque message à transmettre en au moins deux sous-messages tels qu'une combinaison linéaire de ces sous-messages soit égale au message originel et que leur produit scalaire soit nul, chacun de ces N émetteurs indépendants (31) comportant en outre des moyens de modulation par les sous-messages à émettre ;
- un ensemble de M antennes réceptrices (33) solidaires chacune d'un récepteur (34), $M$ étant un entier supérieur à $N$, chaque récepteur (34) comportant des moyens pour séparer les sous-canaux associés aux différents sous-messages issus des N émetteurs indépendants (31), des moyens de changement de fréquence pour transformer les signaux des sous-canaux en signaux en bande de base, et des moyens de numérisation pour numériser lesdits signaux en bande de base en signaux numériques ;
- un calculateur numérique (36) connecté aux sorties desdits récepteurs (34), ledit calculateur étant agencé pour exécuter un algorithme NSJAZ d'estimation des sous-canaux, conforme à la revendication 6.

**8.** Dispositif selon la revendication 7, **caractérisé en ce que**, dans le cas de la transmission de messages sous forme analogique, et d'une décomposition de ces messages en deux sous-messages, les émetteurs (31) comportent deux écrêteurs (40,42) sans seuil complémentaires, auxquels les messages à émettre sont injectés, ces écrêteurs complémentaires étant aptes à délivrer en sortie deux sous-messages complémentaires et orthogonaux.

**Claims**

**1.** Method for simultaneous RF transmission of a set of messages from a plurality of $N$ independent senders (31) each using at least one electromagnetic antenna (32), to receivers (34) comprising a plurality of $M$ receiving antennas (33) such that $M$ is greater than or equal to $N$, **characterized in that** it comprises steps consisting in:

- at each of the said N independent senders (31) and independently of the other senders:
- breaking down (1) each message to be sent by each of the said N independent senders (31) into at least two sub-messages, such that these sub-messages are complementary and orthogonal;
- modulating (2), with the aid of each sub-message of one and the same message, a distinct associated subcarrier, chosen so that the frequencies of the sub-carriers are identical from one message to another, and sending the signals of the sub-messages thus carried in sub-channels that are disjointed in frequency, by means of the said at least one electromagnetic antenna (32) of each of the said N independent senders (31), the said at least one electromagnetic antenna (32) being suitable for the choice of the sub-channels and of the sub-carriers;
- at each of the said M receiving antennas (33) receiving the signals of the sub-messages of all of the N independent senders (31):
- carrying out (3) a change of frequency of the received signal so as to obtain a set of received signals in the base band, linear combinations of the various sub-messages;
- digitizing (4) in synchronous manner the set of signals in the base band supplied by the set of M receiving antennas (33) so as to obtain a set of digitized signals from the set of M receiving antennas (33);
- digitally processing (5) the said set of digitized signals with the aid of an algorithm capable of constructing estimates of separating matrices associated with the sub-channels of transmissions specific to the sub-messages, so as to obtain estimates of the said separating matrices associated with the sub-channels specific to the sub-messages.

2. Method according to Claim 1, **characterized in that** obtaining an estimate of the original messages sent by the N independent senders (31) begins by making a separate estimate of the sub-messages based on the said digitized signals and on the said estimated matrices of the separating matrices associated with the sub-channels, then the original messages are obtained by a weighted summation of the estimated sub-messages.

3. Method according to Claim 1, **characterized in that**, to carry out the said change of frequency (3) of the received signal, the signal received at each receiving antenna (33) is simultaneously multiplied by each of the said sub-carriers used on transmission.

4. Transmission method according to any one of the preceding claims, **characterized in that**, to break down (1) each message into at least two sub-messages of which a linear combination gives the original message and of which a scalar product gives the zero signal, in the case of a breakdown of an analogue message into two sub-messages, the said analogue message is transmitted to the inputs of two complementary thresholdless clippers (40, 42) chosen so that the voltage obtained at the output of one (40) of the said clippers is positive or zero and that the voltage obtained at the output of the other clipper (42) is negative or zero.

5. Transmission method according to Claim 1 or Claim 2, **characterized in that** the said algorithm for constructing estimates of separating matrices associated with the sub-channels of transmissions specific to the sub-messages is an algorithm of non-symmetrical joint zero-diagonalization, or NSJAZ, which uses the property of orthogonality of the sub-messages obtained by the breakdown of one and the same message and result in the availability of a set of jointly zero-diagonalizable matrices in a non-symmetrical manner obtained from the digitized signals.

6. Transmission method according to Claim 5, **characterized in that** the NSJAZ algorithm comprises the steps consisting in:

- constructing a linear combination matrix of the jointly zero-diagonalizable matrices of which the rank is equal to *N*;
- breaking down the matrix obtained into singular values;
- projecting the matrices to be zero-diagonalized onto the sub-space defined by the singular vectors obtained in the previous step;
- stacking in line the vectorized versions of the projected matrices so as to form a matrix having as many lines as there are matrices to be zero-diagonalized and $N^2$ columns;
- calculating a base of the core of dimension *N* of the matrix obtained in the previous step;
- reconstructing in *N* matrices the base vectors of the core according to an inverse method of the vectorization;
- constructing a linear combination inversible matrix of the matrices obtained in the previous step;
- calculating the vectors specific to the bundle of matrices formed by the first matrix originating from the core and the inversible matrix and constructing the separating matrix of the left channel by multiplying the inverse of the matrix of the specific vectors by the transpose of the left singular vectors;
- calculating the specific vectors of the bundle of matrices formed by the transpose of the first matrix originating from the core and the transpose of the inversible matrix, and constructing the separating matrix of the right channel by multiplying the inverse of the matrix of the specific vectors by the transpose of the right singular vectors.

7. Transmission device for the application of the transmission method according to any one of the preceding claims, **characterized in that** it comprises:

- a set of *N* independent senders (31) receiving at the input messages ($x_1, ... x_N$) to be transmitted, each of these N independent senders (31) being configured to be capable of breaking down each message to be transmitted into at least two sub-messages such that a linear combination of these sub-messages is equal to the original message and that their scalar product is zero, each of these N independent senders (31) also comprising means for modulation by the sub-messages to be sent;
- a set of M receiving antennas (33) each secured to a receiver (34), *M* being an integer greater than *N*, each receiver (34) comprising means for separating the sub-channels associated with the various sub-messages originating from the N independent senders (31), means for changing frequency in order to convert the signals of the sub-channels into base band signals, and digitization means for digitizing the said base band signals into digital signals;
- a digital computer (36) connected to the outputs of the said receivers (34), the said computer being arranged to execute an NSJAZ algorithm for estimating the sub-channels according to Claim 6.

8. Device according to Claim 7, **characterized in that**, in the case of the transmission of messages in analogue form, and of a breakdown of these messages into two sub-messages, the senders (31) comprise two complementary thresholdless clippers (40, 42), to which the messages to be sent are injected, these complementary clippers being capable of delivering at the output two complementary and orthogonal sub-messages.

**Patentansprüche**

1. Verfahren zur gleichzeitigen Funkübertragung einer Einheit von Mitteilungen ausgehend von einer Vielzahl von N unabhängigen Sendern (31), die je mindestens eine elektromagnetische Antenne (32) verwenden, an Empfänger (34), die eine Vielzahl von M Empfangsantennen (33) aufweisen, derart, dass M größer als oder gleich N ist, **dadurch gekennzeichnet, dass** es Schritte aufweist, die darin bestehen:

- im Bereich jedes der N unabhängigen Sender (31), und unabhängig von den anderen Sendern:

- jede von jedem der N unabhängigen Sender (31) zu sendende Mitteilung in mindestens zwei Teilmitteilungen zu zerlegen (1), derart, dass diese Teilmitteilungen komplementär und orthogonal sind;
- mit Hilfe jeder Teilmitteilung einer gleichen Mitteilung eine zugeordnete unterschiedliche Teilträgerwelle zu modulieren (2), die so gewählt wird, dass die Frequenzen der Teilträgerwellen von einer Mitteilung zur anderen gleich sind, und die Signale der so getragenen Teilmitteilungen in frequenzgetrennten Teilkanälen mittels der mindestens einen elektromagnetischen Antenne (32) jedes der N unabhängigen Sender (31) zu senden, wobei die mindestens eine elektromagnetische Antenne (32) für die Wahl der Teilkanäle und der Teilträgerwellen geeignet ist;

- im Bereich jeder der M Empfangsantennen (33), die die Signale der Teilmitteilungen der Einheit der N unabhängigen Sender (31) empfangen:

- eine Frequenzänderung des empfangenen Signals durchzuführen (3), um einen Satz von im Basisband empfangenen Signalen zu erhalten, die lineare Kombinationen der verschiedenen Teilmitteilungen sind;
- die Einheit der Signale im Basisband, die von der Einheit der M Empfangsantennen (33) geliefert wird, synchron zu digitalisieren (4), um eine Einheit von digitalisierten Signalen von der Einheit der M Empfangsantennen (33) zu erhalten;
- die Einheit von digitalisierten Signalen mit Hilfe eines Algorithmus digital zu verarbeiten (5), der Schätzungen von trennenden Matrizen konstruieren kann, die den den Teilmitteilungen eigenen Übertragungsteilkanälen zugeordnet sind, um Schätzungen der trennenden Matrizen zu erhalten, die den den Teilmitteilungen eigenen Teilkanälen zugeordnet sind.

2. Verfahren nach Anspruch 1, **dadurch gekennzeichnet, dass** zum Erhalt einer Schätzung der originalen Mitteilungen, die von den N unabhängigen Sendern (31) gesendet werden, damit begonnen wird, eine getrennte Schätzung der Teilmitteilungen ausgehend von den digitalisierten Signalen und den geschätzten Matrizen der den Teilkanälen zugeordneten trennenden Matrizen durchzuführen, dann die originalen Mitteilungen durch eine gewichtete Summierung der geschätzten Teilmitteilungen erhalten werden.

3. Verfahren nach Anspruch 1, **dadurch gekennzeichnet, dass**, um die Frequenzänderung (3) des empfangenen Signals durchzuführen, gleichzeitig das empfangene Signal im Bereich jeder Empfangsantenne (33) mit jeder der beim Senden verwendeten Teilträgerwellen multipliziert wird.

4. Übertragungsverfahren nach einem der vorhergehenden Ansprüche, **dadurch gekennzeichnet, dass** zur Zerlegung (1) jeder Mitteilung in mindestens zwei Teilmitteilungen, von denen eine lineare Kombination die originale Mitteilung ergibt, und von der ein skalares Produkt das Signal Null ergibt, im Fall einer Zerlegung einer analogen Mitteilung in zwei Teilmitteilungen, die analoge Mitteilung an die Eingänge von zwei komplementären schwellenlosen Spitzenbegrenzern (40, 42) übertragen wird, die so gewählt werden, dass die am Ausgang des einen (40) der Spitzenbegrenzer erhaltene Spannung positiv oder Null ist, und dass die am Ausgang des anderen Spitzenbegrenzers (42) erhaltene Spannung negativ oder Null ist.

5. Übertragungsverfahren nach Anspruch 1 oder Anspruch 2, **dadurch gekennzeichnet, dass** der Algorithmus, um Schätzungen von trennenden Matrizen zu konstruieren, die den den Teilmitteilungen eigenen Übertragungsteilkanälen zugeordnet sind, ein Algorithmus der nicht symmetrischen gemeinsamen Null-Diagonalisierung, mit NSJAZ bezeichnet, ist, der die Eigenschaft der Orthogonalität der Teilmitteilungen nutzt, die durch die Zerlegung einer gleichen Mitteilung erhalten werden, und sich durch die Verfügbarkeit einer Einheit von gemeinsam nicht-symmetrisch Null-diagonalisierbaren Matrizen ausdrückt, die ausgehend von den digitalisieren Signalen erhalten werden.

6. Übertragungsverfahren nach Anspruch 5, **dadurch gekennzeichnet, dass** der Algorithmus NSJAZ die Schritte aufweist, die darin bestehen:

- eine Matrix zu konstruieren, die eine lineare Kombination der gemeinsam Null-diagonalisierbaren Matrizen ist, deren Rang gleich N ist;
- die erhaltene Matrix in Einzelwerte zu zerlegen;
- die zu Null-diagonalisierenden Matrizen auf den von den im vorhergehenden Schritt enthaltenen Einzelvektoren definierten Teilraum zu projizieren;
- die vektorisierten Versionen der projizierten Matrizen in Zeile zu stapeln, um eine Matrix zu formen, die ebenso viele Zeilen, wie es zu Null-diagonalisierende Matrizen gibt, und $N^2$ Spalten besitzt;
- eine Basis des Kerns der Dimension N der im vorhergehenden Schritt erhaltenen Matrix zu berechnen;
- die Basisvektoren des Kerns gemäß einem umgekehrten Verfahren der Vektorisierung in N Matrizen zu rekonstruieren;
- eine umkehrbare Matrix zu konstruieren, die eine lineare Kombination der im vorhergehenden Schritt erhaltenen Matrizen ist;
- die Eigenvektoren des Bündels von Matrizen zu berechnen, das aus der vom Kern stammenden ersten Matrix und der umkehrbaren Matrix besteht, und die trennende Matrix des linken Kanals zu konstruieren, indem der Umkehrwert der Matrix der Eigenvektoren mit der transponierten Matrix der linken Einzelvektoren multipliziert wird;
- die Eigenvektoren des Bündels von Matrizen zu berechnen, das aus der transponierten Matrix der vom Kern stammenden ersten Matrix und der transponierten Matrix der umkehrbaren Matrix besteht, und die trennende Matrix des rechten Kanals zu konstruieren, indem der Umkehrwert der Matrix der Eigenvektoren mit der transponierten Matrix der rechten Einzelvektoren multipliziert wird.

7. Übertragungsvorrichtung für die Durchführung des Übertragungsverfahrens nach einem der vorhergehenden Ansprüche, **dadurch gekennzeichnet, dass** sie aufweist:

- eine Einheit von N unabhängigen Sendern (31), die am Eingang zu übertragende Mitteilungen ($X_1$, ... $X_N$) empfangen, wobei jeder dieser N unabhängigen Sender (31) konfiguriert ist, um in der Lage zu sein, jede zu übertragende Mitteilung in mindestens zwei Teilmitteilungen zu zerlegen, derart, dass eine lineare Kombination dieser Teilmitteilungen gleich der originalen Mitteilung ist, und dass ihr skalares Produkt Null ist, wobei jeder dieser N unabhängigen Sender (31) außerdem Einrichtungen zur Modulation mit den zu sendenden Teilmitteilungen aufweist;
- eine Einheit von M Empfangsantennen (33), die je fest mit einem Empfänger (34) verbunden sind, wobei M eine ganze Zahl größer als N ist, wobei jeder Empfänger (34) Einrichtungen, um die den verschiedenen Teilmitteilungen, die von den N unabhängigen Sendern (31) stammen, zugeordneten Teilkanäle zu trennen, Einrichtungen zur Frequenzänderung, um die Signale der Teilkanäle in Signale im Basisband umzuwandeln, und Digitalisierungseinrichtungen aufweist, um die Signale im Basisband in digitale Signale zu digitalisieren;
- einen digitalen Rechner (36), der mit den Ausgängen der Empfänger (34) verbunden ist, wobei der Rechner gestaltet ist, um einen Algorithmus NSJAZ der Schätzung der Teilkanäle gemäß Anspruch 6 durchzuführen.

8. Vorrichtung nach Anspruch 7, **dadurch gekennzeichnet, dass**, im Fall der Übertragung von Mitteilungen in analoger Form und einer Zerlegung dieser Mitteilungen in zwei Teilmitteilungen, die Sender (31) zwei komplementäre schwellenlose Spitzenbegrenzer (40, 42) aufweisen, an die die zu sendenden Mitteilungen injiziert werden, wobei diese komplementären Spitzenbegrenzer am Ausgang zwei komplementäre und orthogonale Teilmitteilungen liefern können.

## Figure 1

$x(t)$

| |
|---|
| Décomposition en sous-messages |

↱ 1

| |
|---|
| Modulation et émission |

↱ 2

| |
|---|
| Réception et changement de fréquence |

↱ 3

| |
|---|
| Numérisation synchrone |

↱ 4

| |
|---|
| Algorithme NSJAZ |

↱ 5

| |
|---|
| Détermination des messages émis |

↱ 6

## Figure 2 (1)

$\mathcal{R} = \{\mathbf{R}_k\}$, ensemble des $K$ matrices $M \times M$ à zéro-diagonaliser

*21*

Construction d'une matrice $\mathbf{R}^{(N)}$, de rang $N$, sur la base des matrices de $\mathcal{R}$

$$\mathbf{R}^{(N)} = \sum_{k=1}^{K} \alpha_k \mathbf{R}_k$$

$\mathbf{R}^{(N)}$

*22*

Calcul des matrices des vecteurs singuliers gauches $\mathbf{U}$ et droits $\mathbf{V}$ de la matrice $\mathbf{R}^{(N)}$ correspondant aux $N$ plus grandes valeurs singulière de $\mathbf{R}^{(N)}$

$\mathcal{R}$ |      $\mathbf{U}$ et $\mathbf{V}$ $(N \times M)$

*23*

Projection des matrices $\mathbf{R}_k$ sur le sous-espace défini par $\mathbf{U}$ et $\mathbf{V}$

$$\mathbf{R}'_k = \mathbf{U}^H \mathbf{R}_k \mathbf{V}$$

$K$ matrices $\mathbf{R}'_k$ $(N \times N)$

Vectorisation des matrices $\mathbf{R}'_k$

$K$ vecteurs $\mathbf{r}_k$ de dimension $N^2$

Empilement en ligne des vecteurs $\mathbf{r}_k$

$\mathbf{R}$ $(K \times N^2)$

*24*

## Figure 2 (2)

**25**

Calcul des vecteurs singuliers gauche correspondant aux $N$ plus petites valeurs singulières de $\mathbf{R}$

$N$ vecteurs $\mathbf{k}_i^{\mathbf{R}}$ de dimension $N^2$

**26**

Construction des matrices $\mathbf{K}_i^{\mathbf{R}}$ à partir des vecteurs $\mathbf{k}_i^{\mathbf{R}}$ selon le procédé inverse de la vectorisation

$N$ matrices $\mathbf{K}_i^{\mathbf{R}}$ ($N \times N$)

**27**

Construction d'une matrice $\mathbf{K}^{(N)}$, de rang $N$, sur la base des matrices $\mathbf{K}_i^{\mathbf{R}}$

$$\mathbf{K}^{(N)} = \sum_{i=1}^{N} \beta_i \mathbf{K}_i^{\mathbf{R}}$$

$\mathbf{K}^{(N)}$ ($N \times N$)

**28**

Calcul de la matrice des vecteurs propres $\mathbf{J}_G$ du faiceau de matrices $\left( \mathbf{K}_1^{\mathbf{R}^T}, \mathbf{K}^{(N)^T} \right)$

**29**

Calcul de la matrice des vecteurs propres $\mathbf{J}_D$ du faiceau de matrices $\left( \mathbf{K}_1^{\mathbf{R}}, \mathbf{K}^{(N)} \right)$ en conservant l'arrangement des valeurs propres obtenu pour le calcul de $\mathbf{J}_G$

**30**

Calcul des matrices séparantes des canaux gauche et droit

$$\mathbf{B}_G = \mathbf{J}_G^{-1} \mathbf{U}^T, \qquad \mathbf{B}_D = \mathbf{J}_D^{-1} \mathbf{V}^T$$

# Figure 3

**36** Calculateur numérique

Calcul des matrices $R_k = y^G[k]y^{DT}[k]$

1. Calcul des matrices $R_k = y^G[k]y^{DT}[k]$

2. Estimation des matrices séparantes $B_G$ et $B_D$ (algorithme NSJAZ)

3. Séparation des sous-messages $x_j^G$ et $x_j^D$

4. Estimation des messages $x_j$ par sommation pondérée des sous-messages

**35** $y_1^G[k] = \sum_{j=1}^{N} h_{1j}^G x_j^G[k]$

$y_1^D[k] = \sum_{j=1}^{N} h_{1j}^D x_j^D[k]$

$y_i^G[k] = \sum_{j=1}^{N} h_{ij}^G x_j^G[k]$

$y_i^D[k] = \sum_{j=1}^{N} h_{ij}^D x_j^D[k]$

**34** Récepteur ZDMA maître

Distribution des porteuses et horloges

Récepteur ZDMA $i$

Récepteur ZDMA $M$

**33**

**32**

**31** Emetteur ZDMA 1

$x_1^G$

$x_1^D$

Emetteur ZDMA $j$

$x_j^G$

$x_j^D$

Emetteur ZDMA $N$

$x_N^G$

$x_N^D$

$x_1$

$x_j$

$x_N$

Figure 4

34

Récepteur ZDMA bipolaire maître

51
52
53
54  55
56
$F_G$
$y_{Gi}[k]$
CAN
57
$F_G$
$H$ (horloge)
58
$H$
59
60
61
62
63
64
65
$F_D$
$y_{Di}[k]$
CAN
$F_D$

Emetteur ZDMA bipolaire

32
31
40
41
$x_j$
44
45
$x_{Gj}$
$F_G$
46
47
48
$x_{Dj}$
$F_D$
42

FIG. 5

**RÉFÉRENCES CITÉES DANS LA DESCRIPTION**

**Documents brevets cités dans la description**

- EP 1786118 A1